# EUROPÄISCHE PATENTSCHRIFT

(11) **EP 2 279 859 B1**
(45) Veröffentlichungstag und Bekanntmachung des Hinweises auf die Patenterteilung: **25.05.2016**
(21) Anmeldenummer: 10168693.9
(22) Anmeldetag: 07.07.2010
(51) Int. Cl.: B32B 5/18, B60R 13/02

(54) **Akustisch wirksame Dach-Versteifungs-Dämpfungs-Platte und Verfahren zu ihrer Herstellung**
Acoustic roof reinforcement insulating board and method for producing same
Plaque d'amortissement et de rigidification de toiture à effet acoustique et son procédé de fabrication

(30) Priorität: 10.07.2009 DE 102009032585
(43) Veröffentlichungstag der Anmeldung: 02.02.2011
(73) Patentinhaber: HP Pelzer Holding GmbH, 58454 Witten (DE)
(72) Erfinder: Schulze, Volkmar, Dr., 58454 Witten (DE); Dubsky, Dalibor, 58454 Witten (DE); Drack, Rüdiger, 58454 Witten (DE); Nicolai, Norbert, Dr. Prof., 58454 Witten (DE)
(74) Vertreter: von Kreisler Selting Werner - Partnerschaft von Patentanwälten und Rechtsanwälten mbB

(56) Entgegenhaltungen:
- EP-A2- 0 993 935
- WO-A1-2005/011974

## Beschreibung

Gegenstand der vorliegenden Erfindung ist eine Dach-Versteifungs-Dämpfungs-Platte (DVD-Platte), die in einem Kraftfahrzeug zwischen den Dachhimmel und dem meist metallenem Dach montiert ist.

Die im Stand der Technik bekannten geräuschdämpfenden DVD-Platten, sind absorptiv nicht wirksam. Bekannte Dachversteifungen haben vornehmlich den folgenden Materialaufbau:
PE-Beschichtung / Kraftliner / PE-Beschichtung
PU-Schaum
PE-Beschichtung / Kraftliner / PE-Beschichtung

Anstatt der Kraftliner finden auch Vliese Anwendung. Sämtlich bekannte Dach-Versteifungs-Dämpfungs-Platten sind akustisch absorptiv nicht wirksam.

DE 196 32 055 C1 /EP 0 825 066 A2 beschreibt eine Dachversteifung, die wie folgt aufgebaut ist:
PE-Beschichtung / Kraftliner / PE-Beschichtung
PU-Schaum
Klebstoff / Kraftliner / PE-Beschichtung

Hergestellt wird die Dachversteifung, indem ein planes mehrschichtiges Halbzeug aus zwei äußeren Kraftlinern und einer mittleren Hartschaumschicht mittig gespalten und mit Übermaß auf die Abmessungen der Dachhaut (Dachhimmel) zugeschnitten wird. Weiterhin wird ein einzelner Kraftliner mit Übermaß auf die Abmessungen der Dachhaut zugeschnitten. Dann werden die Zuschnitte des gespaltenen Halbzeuges und der Zuschnitt des einzelnen Kraftliners zusammen mit einer Klebeschicht zwischen der Seite der Hartschaumschicht und dem einzelnen Kraftliner in einer der Wölbung und Kontur der Dachhaut entsprechenden Formwerkzeug auf die endgültige Form umgeformt und verklebt. Die endgültige Form wird durch Stanzen mittels in dem Formwerkzeug integrierten Stanzmessern erhalten. Die Kraftliner bestehen aus wasserfest verleimten Zellstoffpapier mit einem Flächengewicht von 100 bis 200 g/m²; der Hartschaum besteht aus geschlossenzelligem Polyurethanhartschaum mit einem Raumgewicht von 40 bis 55 kg/m³, die Kunststoffbeschichtungen bestehen aus HDPE, PP oder PET mit Flächengewichten von 10 bis 25 g/m² und die Klebstoffschicht besteht aus 1K- oder 2K-Polyurethansystem beziehungsweise reinem Isocyanat mit Flächengewichten von 60 bis 120 g/m². Durch diese Dachversteifung wird die Dachhaut im Fahrzeuginneren akustisch bedämpft; auch erhält man dadurch eine thermische Isolation. Der Nachteil ist, dass keine Absorption gegeben ist.

EP 0 993 935 A **beschreibt ein Verfahren zur Herstellung einer Dachversteifung sowie eine entsprechend hergestellte Dachversteifung. Die Dachversteifung, die von innen an die Dachhaut des Fahrzeugs anbringbar ist, besteht aus einer mittleren Schaumschicht und zwei äußeren Deckschichten, die an den beiden Seiten der Schaumschicht befestigt sind. Bei der Herstellung werden aus einem Block aus geschäumten Material Platten konstanter Dicke geschnitten. Jede Platte wird beidseitig mit einem reaktiven Kleber beschichtet, anschließend werden die Deckschichten jeweils auf beide Seiten der Platte aufgelegt und schließlich der Verbund in einem beheizten Werkzeug, welches die Kontur des Formteils bestimmt, verpreßt. Dabei wird der reaktive Kleber unter dem Einfluß der Wärme ausgehärtet.**

WO 2005/011974 A1 **beschreibt ein Laminat umfassend einen Schaumkern mit einem Paar einander gegenüberliegender Flächen und einer Deckschicht auf diesen Flächen. Die Deckschicht ist im Wesentlichen frei von Glasfaser und besteht aus einem polymeren Substrat.**

DE 198 47 795 C1 beschreibt die Herstellung einer geschäumten Platte oder eines geschäumten Bandmaterials, das mit einem Härte- oder Klebemittel benetzt oder getränkt ist. Auf die geschäumte Platte oder das geschäumte Bandmaterial werden dann beidseitig Deckschichten aufgelegt, die eine Affinität zu dem Härte- und Klebemittel aufweisen. Der Verbund wird dann in einem beheizten Werkzeug, das die Kontur des Formteiles bestimmt, verpresst. Dabei wird das Härte- und Klebemittel unter dem Einfluss der Wärme ausgehärtet. Die Dachversteifung besteht aus einer mittleren Schaumschicht und zwei äußeren Deckschichten. Zwischen Deckschicht und Schaum befindet sich ein Härte- und Klebemittel, womit der Schaum getränkt ist. Auf der anderen Seite der Deckschicht befindet sich eine Beschichtung, die unter anderem als Wassersperre dient. Der in einem Bad getränkte Schaum wird in einem ersten Kalander gewalkt und das überschüssige Härte- und Klebemittel herausgedrückt. Das Flächengewicht des Härte- und Klebemittels beträgt hier 200 bis 300 g/m². In einem zweiten Kalander werden die Deckschichten auf den Schaum kalandriert, vor diesem wird der Schaum noch mit einem Katalysator benetzt. Der Verbund läuft dann in einen Speicher, der den Übergang von einem kontinuierlichen Vorschub zu einem diskontinuierlichen Formungsprozess ermöglicht.

Die geschäumte Platte oder das geschäumte Bandmaterial ist ein Polyurethanweichschaum auf Polyesterbasis mit einem Raumgewicht von 15 bis 25 kg/m³ und hat eine Dicke von 5 bis 10mm. Die Deckschichten mit einem Flächengewicht zwischen 160 und 200 g/m² umfassen Vliese oder Kraftliner; diese sind mit Fasermaterial, wie Glas- oder Carbonfasern, armiert; und außen und innen mit Beschichtungen aus Polyolefinen mit einem Flächengewicht von 10 bis 30 g/m³ versehen. Der Nachteil hierbei ist, dass keine absorptive Wirksamkeit gegeben ist; auch nicht durch Verwendung des Polyurethanweichschaums. Noch dazu ist dieser mit einem Härte- und Klebemittel getränkt.

In DE 198 47 804 C1 werden aus einem geschäumten Blockmaterial Platten konstanter Dicke geschnitten. Jede Platte wird beidseitig mit einem reaktiven Kleber beschichtet; anschließend werden die Deckschichten, mit einem Flächengewicht zwischen 160 und 200 g/m², jeweils auf beiden Seiten der Platte aufgelegt und schließlich der Verbund in einem beheizten Werkzeug, welches die Kontur des Formteils bestimmt, verpresst, wobei der reaktive Kleber unter dem Einfluss der Wärme ausgehärtet wird. Das Material der geschäumten Platte ist ein halbharter Polyurethanschaum mit einer Dicke im Bereich von 5 und 10mm sowie einem Raumgewicht im Bereich von 20 und 35 kg/m³. Die Deckschichten sind Kraftliner oder Vliese und mit Fasermaterial, wie Glas- oder Carbonfasern armiert sowie außen mit Beschichtungen aus Polyolefinen, versehen. Diese haben ein Flächengewicht im Bereich von 10 und 30 g/m². Die Klebeschichten, die ein Flächengewicht im Bereich von 20 und 40 g/m² aufweisen, sind ein Kleber aus einem PU-System, vornehmlich einem 1-K-PU-System. Auch diese Dachversteifungen haben keine absorptive Wirkung.

In DE 199 49 643 C2 wird ein geschäumtes Bandmaterial, mit einem Raumgewicht im Bereich von 30 und 45 kg/m³, das etwa die doppelte Dicke der gewünschten Dachversteifung hat, hergestellt. Beim Schäumen wird dem Bandmaterial beidseitig eine Deckschicht mit Flächengewichten im Bereich von 100 und 250 g/m² aufgelegt, die selbst oder über eine innere Beschichtung eine Affinität zu dem geschäumten Bandmaterial oder ein dem geschäumten Bandmaterial zusetzbares Härte- und Klebemittel, ein Diisocyanat, aufweist. Das geschäumte Bandmaterial wird durch mittiges Spalten in zwei einseitig mit einer Deckschicht versehenen Platten konstanter Dicke ohne Kontur geschnitten. Die endgültige Formgebung der Platte wird durch Verklebung der unbeschichteten Seite der Platte mit der Dachhaut erhalten. Das geschäumte Bandmaterial ist ein halbharter Polyurethanschaum; die Deckschicht ist ein Kraftliner oder ein Vlies, das außen und innen mit Beschichtungen aus Polyolefinen versehen ist. Auch diese Dachversteifungen haben keine absorptive Wirkung.

Bekannt sind auch DVD-Platten unter Verwendung von Hartschaum, der aus geschlossenzelligem Polyurethanhartschaum besteht, und der zum Fahrzeugraum zeigende Kraftliner mit gestanzten Löchern versehen ist. Auch sind diese DVD-Platten aufgrund des geschlossenzelligen Polyurethanhartschaums wenig absorptiv.

Der Erfindung liegt die Aufgabe zugrunde, eine DVD-Platte herzustellen, die neben der Aussteifungswirkung, der Feuchtigkeitsresistenz und den Dämpfungseigenschaften zusätzlich eine absorptive Wirksamkeit aufweist. Erfindungsgemäß sollen die DVD-Platten nicht nur geräuschdämpfend, sondern in ihrer Funktionalität zusätzlich akustisch absorptiv wirksam ausgerüstet werden.

Die vorliegende Aufgabe wird in einer ersten Ausführungsform gelöst durch eine Dach-Versteifungs-Dämpfungsplatte (DVD-Platte) eines Kraftfahrzeugs mit folgendem Schichtaufbau:
Polyolefin- Beschichtung / Kraftliner (1) / Polyolefin-Beschichtung PU-Schaum
Polyolefin- Beschichtung / Kraftliner (2) / Polyolefin-Beschichtung
die dadurch gekennzeichnet ist, dass
der PU-Schaum einen offenzelliger Halbhartschaum mit einer Rohdichte gemäß DIN 53420 im Bereich von 20 bis 80 kg/m³, einer Stauchhärte (40 % Stauchung) nach DIN 53577 im Bereich von 50 bis 80 kPa, einer Zugfestigkeit nach DIN 53571 im Bereich von 100 bis 140 kPa und einer Bruchdehnung nach DIN 53571 im Bereich von 90 bis 120 % umfasst und
der Kraftliner (2) einschließlich der darauf befindlichen Polyolefin-Beschichtungen durch Nadelung mikroperforiert ist, wobei die Nadelungs-(Stich-)Kanäle in die Halbhartschaumstoffschicht hineinragen.

Zum einen wird ein offenporiger (akustisch wirksamer) Schaum mittels Sprühtechnologie zwischen zwei Kraftliner eingetragen, und zum anderen wird wenigstens einer der Kraftliner der DVD-Platte durch Nadelung mikroperforiert. Durch die Nadelung wird ein Nadelungs-(Stich-)Kanal durch den Kraftliner in die dahinterliegende Schaumschicht erhalten und somit die Kraterwände der Nadelung des Kraftliners fest mit der Schaumstoffschicht verbunden. Die bevorzugt mikroperforierte Seite der DVD-Platte weist - im montierten Zustand - zum Fahrgastraum des Kraftfahrzeugs.

Der Kern der vorliegenden Erfindung umfasst insbesondere:
1. die Technologie des PUR-Schaumstoff-Eintrages; nämlich der platzierten Sprühtechnologie
2. die Anwendung von handelsüblichen Nadelanlagen, wie sie aus der Textilindustrie bekannt sind zum Perforieren der erfindungsgemäßen DVD-Platten
3. die Ausstattung der DVD-Platten mit einer absorptiven Wirkung
4. gegebenenfalls die Anwendung von ausgeschäumten oder teilausgeschäumten Pappwabenstrukturen zur Erhöhung der Bauteilsteifigkeit

Der besondere Vorteil der Erfindung besteht in der akustischen Wirksamkeit der erfindungsgemäßen DVD-Platte. Damit werden die größte Fläche im Kraftfahrzeug, nämlich der Dachhimmel und das Dach absorptiv ausgerüstet.

Der Begriff Kraftliner im Sinne der vorliegenden Erfindung umfasst eine Papierart. Sie besteht aus gebleichtem oder ungebleichtem Kraftzellstoff (Sulfatzellstoff) mit einem besonders hohen Anteil langer Fasern. Kraftliner wird üblicherweise als Deckschicht von Well- oder Vollpappe verwendet. Es besitzt eine hohe Festigkeit und ist widerstandsfähig gegen Feuchte. Kraftliner muss laut deutscher Zolldefinition ein Mindestflächengewicht von 120 g/m² aufweisen, wird jedoch mit Flächengewichten im Bereich von 115 g/m² bis 430 g/m² angeboten. Der Recyclinganteil ist hoch (bis zu 20%). Alternativ zu den Kraftlinern können einzelne oder alle Lagen durch handelsübliche Naturfaser- oder Kunststoffvliese gleicher Grammatur ersetzt werden. Erfindungsgemäß werden handelsübliche Kraftliner verwendet.

Die Funktion der Polyolefin-Beschichtung umfasst insbesondere die Feuchtigkeitsbeständigkeit und Klebefähigkeit des Kraftliners. Die Materialien dieser Schichten umfassen insbesondere Polyethylen und/oder Polypropylen, das heißt auch entsprechende Copolymere. Prinzipiell sind jedoch auch beliebig andere Polymere mit gleichen Eigenschaften, wie beispielsweise Polyester oder Polyurethane, einsetzbar. Das Flächengewicht der Polyolefin-Beschichtung beträgt beispielsweise 10 bis 70 g/m².

Der Schaumstoff zwischen den beschichteten Kraftlinern umfasst insbesondere offenzellige Halbhartschaumstoffe, die ein ausgezeichnetes Dämpfungsverhalten aufweisen. Diese Gruppe von Schaumstoffen bildet bei Schäumen insbesondere im Spritzverfahren keine nennenswerte Haut und hat ausgezeichnete Haftung zu vielen Deckschichtmaterialien. Die Rohdichte gemäß DIN 53420 beträgt beispielsweise 20 bis 80 kg/m³, die Stauchhärte (40 % Stauchung) nach DIN 53577 beispielsweise 50 bis 80 kPa, die Zugfestigkeit nach DIN 53571 beispielsweise 100 bis 140 kPa, und die Bruchdehnung nach DIN 53571 beispielsweise 90 bis 120.

Erfindungsgemäße DVD-Platten sind vorzugsweise dadurch gekennzeichnet, dass die Dicke der Schaumstoffschicht 3 bis 10 mm, insbesondere 4 bis 7 mm beträgt.

Zur Erhöhung der Bauteilsteifigkeit kann zwischen den beiden Kraftlinern eine Pappwabenstruktur eingelegt werden, die dann mit dem offenporigen PUR-Schaumstoff mittels Sprühtechnologie vollständig oder auch teilausgeschäumt wird.

Eine weitere Ausführungsform der vorliegenden Erfindung besteht im Verfahren zur Herstellung der erfindungsgemäßen DVD-Platten, wobei zwischen zwei Kraftlinern bekannter Materialstruktur (PO-Kraftliner-PO), insbesondere PE-Kraftliner-PE, ein offenporiger PUR- Schaumstoff mittels Sprühtechnologie eingetragen wurde. Die Aushärtung und Formgebung erfolgte in einem beheizten Plattenwerkzeug. Die DVD-Platte mit einer Gesamt-Dicke von 5 mm wurde mit einer Geschwindigkeit von 4 m/min durch eine im Handel erhältliche Fehrer-Nadelanlage gefahren. Hierbei erfolgte die einseitige Mikroperforierung der Platte. Anwendung fanden handelsübliche Felting-Nadeln; die Einstichtiefe betrug 3mm und der Nadelabstand 4mm. Das Raumgewicht des offenporigen PUR- Schaumstoffes lag hierbei zwischen 42 und 47 kg/m³. Durch die genadelte Mikroperforation, bei der der Stichkanal im Materialverbund nicht zum Innenraum des Kraftfahrzeuges sondern zum Schaum wies, erhielt man einen Trichter, der die zusätzliche Wirkung eines Helmholtz-Resonators aufweist. Die akustische Wirkung kann durch das Nadelungskanal-Volumen, den Kanaldurchmesser und die Kanallänge, "eingestellt" werden.

Die erfindungsgemäße Mikroperforierung umfasst beispielsweise Löcher eines Durchmessers im Bereich von 0,2 bis 2,5 mm, insbesondere von 0,4 bis 1,8 mm mit einer Lochflächendichte, gemessen als ausgestanzten Flächenanteil von im Bereich von 0,2 bis 11 %.

Erfindungsgemäß kann somit der im Stand der Technik notwendige Kleber zur Befestigung der fahrgastseitigen Kraftliner-Schicht mit dem Schaumstoff entfallen. Darüber hinaus kann auch die aufwändige Spaltung der Ausgangslagen vermieden werden. Dadurch ist eine Reduktion der selbstanregenden Schwingungen in Abhängigkeit der jeweiligen Konstruktion des Daches möglich. So können zusätzliche Spriegel entfallen und/oder die Blechdicke des Daches deutlich reduziert werden, so dass trotz Anwesenheit der erfindungsgemäßen DVD-Platte eine Gewichtsersparnis möglich ist. Zusätzliche Dämmmaterialien wie Bitumen, Vliese etc. können entfallen.

## Patentansprüche

1. Dach-Versteifungs-Dämpfungsplatte (DVD-Platte) eines Kraftfahrzeugs mit folgendem Schichtaufbau:
Polyolefin-Beschichtung / Kraftliner (1) / Polyolefin-Beschichtung PU-Schaum
Polyolefin-Beschichtung / Kraftliner (2) / Polyolefin-Beschichtung
**dadurch gekennzeichnet, dass**
der PU-Schaum einen offenzelliger Halbhartschaumstoff mit einer Rohdichte gemäß DIN 53420 im Bereich von 20 bis 80 kg/m³, einer Stauchhärte (40 % Stauchung) nach DIN 53577 im Bereich von 50 bis 80 kPa, einer Zugfestigkeit nach DIN 53571 im Bereich von 100 bis 140 kPa und einer Bruchdehnung nach DIN 53571 im Bereich von 90 bis 120 % umfasst und
der Kraftliner (2) einschließlich der darauf befindlichen Polyolefin- Beschichtungen genadelt ist, wobei die Nadelungs-(Stich-)Kanäle in die Halbhartschaumstoffschicht hineinragen.

2. DVD-Platte nach Anspruch 1, **dadurch gekennzeichnet, dass** die Dicke der Schaumstoffschicht 3 bis 10 mm, insbesondere 4 bis 7 mm beträgt.

3. DVD-Platte nach einem der Ansprüche 1 und 2, **dadurch gekennzeichnet, dass** ein Kraftliner ein Mindestflächengewicht von 120 g/m² aufweist.

4. DVD-Platte nach einem der Ansprüche 1 bis 3, **dadurch gekennzeichnet, dass** ein Kraftliner ein Flächengewicht im Bereich von 100 g/m² bis 430 g/m² aufweist.

5. DVD-Platte nach einem der Ansprüche 1 bis 4, **dadurch gekennzeichnet, dass** das Flächengewicht der Polyolefin- Beschichtung 10 bis 70 g/m2 beträgt.

6. DVD-Platte nach einem der Ansprüche 1 bis 5, **dadurch gekennzeichnet, dass** die Polyolefin- Beschichtung Polyethylen umfasst.

7. DVD-Platte nach einem der Ansprüche 1 bis 6, **dadurch gekennzeichnet, dass** die Mikroperforierung des Kraftliners und der angrenzenden Schaumstoffschicht Löcher (konische Kapillare) einen oder mehrere Durchmesser im Bereich von 0,2 bis 2,5 mm mit einer Lochflächendichte, gemessen als ausgestanzter Flächenanteil im Bereich von 0,2 bis 11 % umfasst.

8. DVD-Platte nach einem der Ansprüche 1 bis 7, **dadurch gekennzeichnet, dass** zwischen den beiden Kraftlinern eine Pappwabenstruktur eingelegt ist, die mit offenporigen Schaumstoff teilweise oder vollständig teilausgeschäumt ist.

9. Verfahren zur Herstellung einer DVD-Platte nach einem der Ansprüche 1 bis 8, wobei man
(a) zwischen zwei mit Polyolefin beschichteten Kraftlinern einen offenporigen PUR- Halbhartschaumstoff mittels Sprühtechnologie einträgt,
(b) den Sandwich-Verbund in einem beheizten Plattenwerkzeug aushärtet und formt und
(c) die geformte DVD-Platte durch eine handelsübliche Nadelanlage zur wenigstens einseitigen Mikroperforierung der Platte fährt.

10. Verfahren zur Herstellung einer DVD-Platte nach Anspruch 9, wobei man in Schritt (a)
(a1) zwischen zwei mit Polyolefin beschichteten Kraftlinern eine Pappwabenstruktur einlegt,
(a2) diese mit einem offenporigen PUR- Halbhartschaumstoff mittels Sprühtechnologie teilweise oder vollständig aus schäumt.

## Claims

1. A roof stiffening attenuation plate of a motor vehicle with the following layer structure:
polyolefin coating/kraftliner (1)/polyolefin coating PU foam
polyolefin coating/kraftliner (2)/polyolefin coating
**characterized in that**
said PU foam comprises an open-cell semi-rigid foam having a bulk density according to DIN 53420 within a range of from 20 to 80 kg/m³, a compression hardness (40% compression) according to DIN 53577 within a range of from 50 to 80 kPa, a tensile strength according to DIN 53571 within a range of from 100 to 140 kPa, and an elongation at break according to DIN 53571 within a range of from 90 to 120%; and
said kraftliner (2) including the polyolefin coatings applied thereto is needled, wherein the needling (puncture) channels protrude into the semi-rigid foam layer.

2. The roof stiffening attenuation plate according to claim 1, **characterized in that** the thickness of the foam layer is from 3 to 10 mm, especially from 4 to 7 mm.

3. The roof stiffening attenuation plate according to either of claims 1 and 2, **characterized in that** a kraftliner has a minimum mass per area of 120 g/m².

4. The roof stiffening attenuation plate according to any of claims 1 to 3, **characterized in that** a kraftliner has a mass per area within a range of from 100 g/m² to 430 g/m².

5. The roof stiffening attenuation plate according to any of claims 1 to 4, **characterized in that** the mass per area of said polyolefin coating is from 10 to 70 g/m².

6. The roof stiffening attenuation plate according to any of claims 1 to 5, **characterized in that** said polyolefin coating comprises polyethylene.

7. The roof stiffening attenuation plate according to any of claims 1 to 6, **characterized in that** the microperforation of the kraftliner and of the adjacent foam layer holes (conical capillary) has one or more diameters within a range of from 0.2 to 2.5 mm with a hole density per area, measured as the punched-out fraction of the area, within a range of from 0.2 to 11%.

8. The roof stiffening attenuation plate according to any of claims 1 to 7, **characterized in that** a cardboard honeycomb structure partially or completely foam-filled with open-cell foam is inserted between the two kraftliners.

9. A process for preparing a roof stiffening attenuation plate according to any of claims 1 to 8, wherein
(a) an open-cell PUR semi-rigid foam is inserted by spraying technology between two polyolefin-coated kraftliners;
(b) the sandwich composite is cured and formed in a heated sheet mold; and
(c) the formed roof stiffening attenuation plate is conducted through a commercially available needling plant for microperforating the plate on at least one side thereof.

10. The process for preparing a roof stiffening attenuation plate according to claim 9, wherein in step (a):
(a1) a cardboard honeycomb structure is inserted between two polyolefin-coated kraftliners;
(a2) said structure is partially or completely foam-filled with open-cell PUR semi-rigid foam by spraying technology.

## Revendications

1. Plaque d'atténuation et de raidissement du toit d'une véhicule à moteur, avec la structure en couches suivante:
revêtement de polyoléfine/papier de couverture kraft (1)/revêtement de polyoléfine
mousse de PU
revêtement de polyoléfine/papier de couverture kraft (2)/revêtement de polyoléfine
**caractérisée en ce que**
ladite mousse de PU comprend une mousse semi-rigide à cellules ouvertes ayant une densité apparente selon DIN 53420 comprise entre 20 et 80 kg/m³, une dureté de compression (40 % compression) selon DIN 53577 comprise entre 50 et 80 kPa, une résistance à la traction selon DIN 53571 comprise entre 100 et 140 kPa, et un allongement à la rupture selon DIN 53571 compris entre 90 et 120 %, et
ledit papier de couverture kraft (2) incluant les revêtements de polyoléfine appliquées dessus est aiguilleté, dans laquelle les canaux d'aiguilletage (de perforation) font saillie dans la couche de mousse semi-rigide.

2. Plaque d'atténuation et de raidissement du toit selon la revendication 1, **caractérisée en ce que** l'épaisseur de la couche de mousse et de 3 à 10 mm, notamment de 4 à 7 mm.

3. Plaque d'atténuation et de raidissement du toit selon l'une des revendications 1 et 2, **caractérisée en ce qu'**un papier de couverture kraft présente un grammage minimal de 120 g/m².

4. Plaque d'atténuation et de raidissement du toit selon l'une quelconque des revendications 1 à 3, **caractérisée en ce qu'**un papier de couverture kraft présente un grammage compris entre 100 g/m² et 430 g/m².

5. Plaque d'atténuation et de raidissement du toit selon l'une quelconque des revendications 1 à 4, **caractérisée en ce que** le grammage du revêtement de polyoléfine est de 10 à 70 g/m².

6. Plaque d'atténuation et de raidissement du toit selon l'une quelconque des revendications 1 à 5, **caractérisée en ce que** le revêtement de polyoléfine comprend du polyéthylène.

7. Plaque d'atténuation et de raidissement du toit selon l'une quelconque des revendications 1 à 6, **caractérisée en ce que** la microperforation du papier de couverture kraft et les trous de la couche de mousse adjacente (capillaire conique) présentent un ou plusieurs diamètres compris entre 0,2 et 2,5 mm avec une densité de trous superficielle comprise entre 0,2 et 11 %, mesurée comme fraction de la superficie éliminée par poinçonnage.

8. Plaque d'atténuation et de raidissement du toit selon l'une quelconque des revendications 1 à 7, **caractérisée en ce qu'**une structure de carton en nid d'abeille partiellement ou complètement remplie de mousse à cellules ouvertes est insérée entre les deux papiers de couverture kraft.

9. Procédé pour préparer une plaque d'atténuation et de raidissement du toit selon l'une quelconque des revendications 1 à 8, comprenant les étapes consistant à :
(a) insérer une mousse semi-rigide de PU à cellules ouvertes entre deux papiers de couverture kraft revêtus de polyoléfine au moyen d'une technique de pulvérisation,
(b) cuire et former le sandwich composite dans un moule plat chauffé, et
(c) alimenter la plaque d'atténuation et de raidissement du toit formée à travers un poste d'aiguilletage disponible sur le marché pour la microperforation de la plaque sur au moins un de ses côtés.

10. Procédé pour préparer une plaque d'atténuation et de raidissement du toit selon la revendication 9, l'étape (a) comprenant les étapes consistant à :
(a1) insérer une structure de carton en nid d'abeille entre deux papiers de couverture kraft revêtus de polyoléfine,
(a2) remplir cette structure partiellement ou complètement d'une mousse semi-rigide de PU à cellules ouvertes au moyen d'une technique de pulvérisation.
